# EUROPEAN PATENT SPECIFICATION

(11) **EP 2 829 583 B1**
(45) Date of publication and mention of the grant of the patent: **16.03.2016**
(21) Application number: 13177457.2
(22) Date of filing: 22.07.2013
(51) Int. Cl.: C09D 183/04, G02B 1/10, G02C 7/02, C08K 3/22

(54) **Hard coating composition**
Hartbeschichtungszusammensetzung
Composition de revêtement dur

(43) Date of publication of application: 28.01.2015
(73) Proprietor: Itoh Optical Industrial Co., Ltd., Aichi 443-0041 (JP)
(72) Inventor: Uchida, Naoki, Aichi, 443-0041 (JP)
(74) Representative: Vossius & Partner Patentanwälte Rechtsanwälte mbB

(56) References cited:
- EP-A1- 1 162 245
- EP-A1- 1 947 155
- EP-A2- 2 275 841
- US-A1- 2009 029 153

## Description

### BACKGROUND OF THE INVENTION

### Field of the Invention

The present invention relates to a hard coating composition. The hard coating composition is especially favorable for an optical component formed of an organic glass having a high refractive index. Here, "optical component" is a concept that not only includes optical parts, such as spectacle lenses, camera lenses, etc., but also includes lighting equipment covers, reflecting mirrors, prism, and filters.

In the following description, blend (composition) units, mixing ratios, etc., are in mass units. Also, refractive indices are those determined at 25°C using the mercury E line.

Further, numerical ranges indicating compositions, etc., are not absolute ranges of critical significance but favorable ranges considered to be practically possible are indicated as examples.

Also, particle diameters of colloidal particles are those based on a dynamic light scattering method.

### Description of the Related Art

Although a spectacle lens shall mainly be described as an example, the present invention is not restricted thereto.

In comparison to a conventional inorganic glass, an organic glass used as an optical lens has advantages of being lightweight, excellent in impact resistance, tintable, and easy to process and use thereof is thus becoming generally popular.

However, in the organic glass state, there are disadvantages of low abrasion resistance and easily being flawed in comparison to inorganic glass. As a countermeasure, application of a silicone-based hard coating film (cured coating film) on a surface of an optical substrate made of organic glass is generally practiced for the purpose of improving abrasion resistance.

For example, the present applicant has priorly proposed and partially put to practical use a tintable coating composition made up of an epoxy-group-containing silane compound, a carboxylic acid, and a curing agent (Patent Document 1).

On the other hand, when compared to a spectacle lens made of inorganic glass, a spectacle lens made of organic glass is low in refractive index and, when used in a spectacle lens, is poor in appearance due to the lens end surface being thick and thus considered to be unsuitable for strong visual correction.

However, due to recent technical innovations, organic glass with a refractive index of no less than 1.60 has come to be available in the market and presently, organic glass occupies 60% of the market share on a volume basis and is in a trend of increasing further in the future.

A coating composition (hard coating composition) for optical plastic molded products that is applicable to such an organic glass lens of high refractive index has been proposed and partially put to practical use (Patent Document 2).

On the other hand, as a recent trend, being fashionable is being stressed more in spectacles and it has become necessary to accommodate for a higher variation of colored lenses. However, an organic glass lens of high refractive index is relatively poor in tintability. Problems thus tend to occur in terms of productivity of colored lenses.

The hard coating composition described in Patent Document 2 is excellent in the characteristic of suppressing optical interference between the coating film and an organic glass with a refractive index of no less than 1.60 and thereby maintaining the optical functions of an organic glass lens body.

However, when a spectacle lens to which the hard coating composition is applied is used for a long period of time, iron oxide portions in iron oxide/titanium oxide composite oxide microparticles used as a coating film component undergo a blackening phenomenon due to ultraviolet rays, thereby damaging the aesthetic properties.

Also, the hard coating layer degrades or undergoes discoloration or decoloration when exposed to ultraviolet rays due to a photocatalytic action of titanium oxide in the iron oxide/titanium oxide composite oxide microparticles.

The present applicant has thus priorly proposed in Patent Document 3 and partially put to practical use a hard coating composition of the composition indicated below that is capable of suppressing the blackening phenomenon with respect to ultraviolet rays, is capable of suppressing discoloration and decoloration (fading) of a color lens, and does not become damaged in aesthetic properties under use over a long period of time while maintaining the characteristic of the hard coating composition of Patent Document 2 of suppressing optical interference with respect to an organic glass lens with a high refractive index.

"A hard coating composition made by dispersing nanoparticles of Nb₂O₅ in a colloidal state in a hydrolyzate mixture of a glycidoxyalkyltrialkoxysilane and a tetraalkoxysilane."

However, it was found that with the hard coating composition of the arrangement proposed in Patent Document 3, although excellent performance can be obtained with a high refractive index organic glass with a refractive index of up to 1.67, when applied to an organic glass lens of even higher refractive index (for example, a refractive index of 1.70 to 1.74), optical interference and a blue discoloration due to ultraviolet rays occur in the hard coating.

In view of the above, an object (problem) of the present invention is to provide a hard coating composition with which optical interference and the blue discoloration due to ultraviolet rays do not occur when applied to an ultrahigh refractive index organic glass lens with a refractive index exceeding 1.67.
Patent Document 1: JP No. Sho 57-42665 B(claims, etc.)
Patent Document 2: JP No. 2577670 B(claims, etc.)
Patent Document 3: JP No. 4589115 B (claims, etc.)

### SUMMARY OF THE INVENTION

To solve the above problem (achieve the above object), the present inventors made diligent efforts in development and thereby arrived at a hard coating composition of the following composition.

A hard coating composition applied to an optical component body formed of an organic glass,
including, as coating film forming components, an alkoxysilane hydrolyzate and a low-temperature curing catalyst of the hydrolyzate, and
where the alkoxysilane hydrolyzate is a hydrolyzate of a mixture of a predetermined ratio of
an (A) component that is a trialkoxysilane represented by the rational formula, 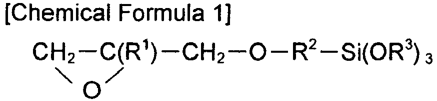 (where R¹ represents H or CH₃, R² represents an alkylene group with 1 to 4 carbon atoms, and R³ represents an alkyl group with 1 to 4 carbon atoms), and
a (B) component that is a tetraalkoxysilane represented by the rational formula, Si(OR⁴)₄ (where R⁴ represents an alkyl group with 1 to 4 carbon atoms),
a metal oxide colloid is blended to enable a coating film refractive index of a hard coating to be made approximate to the refractive index of the organic glass,
the metal oxide colloid is a rutile-based colloid containing an amine dispersant, the low-temperature curing catalyst is an organic carboxylic acid, and a ratio of the (B) component with respect to the (A) component is increased to make the hard coating have a practical abrasion resistance.

That is, as a metal oxide colloid, the present inventors took note of a rutile-based colloid having rutile (rutile type titania), which is highest in refractive index among metal oxides and is low in photocatalytic activity, as colloidal particles.

Adding of a rutile-based colloid to a hard coating composition having an alkoxysilane hydrolyzate as the coating film forming component has not been performed conventionally by persons skilled in the art. This is considered to be because a rutile-based colloid normally contains an amine dispersant that reacts with the organic carboxylic acid that is the low-temperature curing agent of the alkoxysilane hydrolyzate to produce an amide and thereby inhibit the actions of the low-temperature curing agent.

However, by making the hard coating composition be of the above arrangement, even when the composition is applied to an organic glass lens of ultrahigh refractive index to form a hard coating as shall be described below by way of examples, optical interference and a blue discoloration due to ultraviolet rays do not occur in the hard coating.

The reason why optical interference does not occur is because the colloidal particles (of less than 100nm) of the rutile (rutile type titania) based colloid with a refractive index of 2.616 (ordinary ray), which is high in comparison to the refractive index of 2.33 (near 500nm) of Nb₂O₅, is well-dispersed.

Also, the reason why the blue discoloration does not occur is considered to be as follows.

When, as the low-temperature curing catalyst, an organometallic compound (metal chelate compound) of Al, etc., is used, excited electrons of rutile (TiO₂) are captured by the metal atom (Al) so that the rutile (TiO₂) becomes reduced and turns blue. On the other hand, when an organic carboxylic acid is used, the excited electrons of titanium oxide are not captured and the excited electrons return to Ti so that it does not turn blue.

### BRIEF DESCRIPTION OF THE DRAWINGS

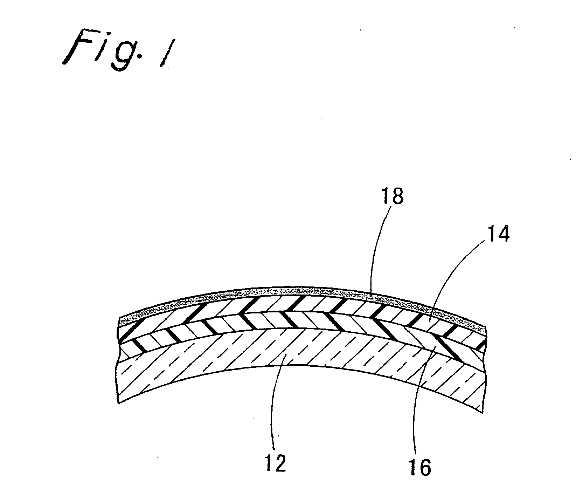

FIG. 1 is a schematic sectional view of a layer arrangement of a spectacle lens to which the present invention is applied.

### DETAILED DESCRIPTION OF THE PREFERRED EMBODIMENTS

A mode (arrangement) for carrying out the present invention shall now be described in detail.

### <1> Alkoxysilane hydrolyzate as a coating film component (main coating film component):

In the present invention, the alkoxysilane hydrolyzate is made up of a hydrolyzate of a mixture of a predetermined ratio of an (A) component that is a trialkoxysilane exemplified below and a (B) component that is a tetraalkoxysilane exemplified below.

### (A) component: Trialkoxysilane

The (A) component is basically represented by the rational formula: 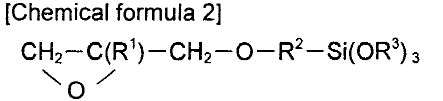 (where R¹ represents H or CH₃, R² represents an alkylene group with 1 to 4 carbon atoms, and R³ represents an alkyl group with 1 to 4 carbon atoms) and specifically,
glycidoxymethyltrialkoxysilanes, α-(β-) glycidoxyethyltrialkoxysilanes, α-(β-, γ-, δ) glycidoxybutyltrialkoxysilanes, α-(β-, γ-, δ) glycidoxypropyls, and derivatives of the above can be cited. Any of these may be used alone or two or more types may be used in combination.

### (B) component: Tetraalkoxysilane

The (B) component is basically represented by the rational formula Si(OR⁴)₄ (where R⁴ represents an alkyl group with 1 to 4 carbon atoms) and specifically,
tetraethoxysilane, tetramethoxysilane, tetrapropoxysilane, tetrabutoxysilane, etc., can be cited. Any of these may be used alone or two or more types may be used in combination.

The hydrolyzate of each alkoxysilane is obtained by dripping a silane compound into a dilute acid of 0.01 to 0.1 N under the presence of a lower alcohol. Specifically as the dilute acid, hydrochloric acid, sulfuric acid, phosphoric acid, acetic acid, formic acid, oxalic acid, sulfonic acid, etc., can be cited.

The mixing ratio of the (A) component and the (B) component is such that the coating film is provided with a required coating film hardness (abrasion resistance (sand eraser 200g) of no less than AB).

Although slightly varying according to the type of each of the (A) and (B) components, the mixing ratio of the (A) component and the (B) component is set as appropriate from a range of (A)/(B) = 10/1 to 10/10 and preferably 10/2 to 10/8.

That is, the lower the numerical value of (A)/(B), the higher the proportion of the tetraalkoxysilane that is the (B) component and the easier it is to obtain the coating film hardness. However, if the numerical value of (A)/(B) is high, an appearance defect due to cracking may occur during the polymerization of the coating film, and if the ratio is low, a practical coating film hardness may not be obtained.

Here, the mixing ratio is relatively high in comparison to the (A)/(B) = 10/0.52 to 10/3.3 (9.5/0.5 to 7.5/2.5) in the case of Patent Document 3, with which a niobium pentoxide (Nb₂O₅) colloid is used. This is because the coating composition according to the present invention contains an amine and the coating film hardness is thereby reduced.

### <2> Rutile-based colloid as a high refractive index imparting agent:

The most prominent feature of the present invention is that a "rutile-based colloid containing an amine dispersant" is added as the metal oxide colloid to the alkoxysilane hydrolyzate.

Here, the "rutile-based colloid" is made up solely of rutile type titania (rutile) or is a colloidal dispersion of microparticles of a mixture of rutile and another high refractive index type metal oxide or of composite oxide microparticles, with rutile as the main component.

Here, although the size of the colloidal particles differs slightly according to the type, etc., of rutile-based colloid (differences in method of manufacture and material of the colloidal particles), the average particle diameter (median diameter) is selected from a range of preferably 5 to 60nm, more preferably 6 to 20nm, and even more preferably 8 to 10nm.

When the average particle diameter of the colloidal particles is small, it becomes difficult to impart abrasion resistance to the coating film and the rutile microparticles aggregate readily so that an appearance defect due to unevenness of coating film may occur. Oppositely, when the colloidal particles are too large, an appearance defect due to whitening of the coating film may occur.

As the amine dispersant, ammonia as well as aliphatic amines, aliphatic diamines, cyclic amines, and derivatives of thereof with which one, two, or three of the hydrogen atoms of ammonia NH₃ is or are substituted by a hydrocarbon group R⁵ (with 1 to 5 carbon atoms) can be cited. One type or a mixture combining two or more types of the above is used as appropriate.

Here, the added amount of the amine dispersant, although differing according to the type of amine dispersant, is 0.1 to 4.5 parts and preferably 0.45 to 4.0 parts with respect to 100 parts of the colloidal particles (rutile-based microparticles: solids) in the rutile-based colloid.

As the medium (dispersion medium) of the rutile-based colloid, one type or two or more types, selected from among monovalent lower alcohols (with 1 to 3 carbon atoms), such as methanol, ethanol, IPA, etc.; ethylene glycol (1,2-dioxyethane), polyvalent alcohols, such as 2-methoxyethanol, 2-ethoxyethanol, 1,2-dioxyethanol, 2-butoxyethanol, 1-methoxy-2-propanol, etc., and ethers thereof, etc., may be used favorably, and besides the above, the medium may also be an ester.

Here, the mixing ratio of the colloidal particles and the medium is within a range in which the dispersion of the colloidal particles can be maintained. That is, although differing according to the type (material, particle diameter) of the colloidal particles, the type of the medium, the type of the amine-based dispersant, and the dispersion method, the ratio is set, for example, as appropriate in a range of former: latter = 10 : 15 to 40.

When the proportion of the medium is low, the colloidal particles readily undergo an aggregation phenomenon, and when the proportion of the medium is high, it becomes difficult to secure an adequate proportion of the colloidal particles in the coating film and therefore difficult to obtain the high refractive index and abrasion resistance that are the effects due to the addition of the rutile-based colloid.

A method for manufacturing the rutile-based colloid is not restricted in particular and the colloid may be manufactured by a usual method, for example, 1) an ion exchange method, 2) a peptization method, etc.
1) Ion exchange method: A method in which an acid salt of the above metal is treated by a hydrogen-type ion exchange resin or a method in which a basic salt of the above metal is treated by a hydroxide-type anion exchange resin can be cited.
2) Peptization method: A method in which a gel, obtained by neutralizing an acid salt of titanium with a base or by neutralizing a basic salt of titanium with an acid, is washed and thereafter peptized by an acid or a base (JP No. Hei 4-27168 A), a method of hydrolyzing an alkoxide of titanium (JP No. 3878113 B), or a method of hydrolyzing a basic salt of titanium under heating (JP No. 4069330 B), etc., can be cited.

The rutile-based colloid may be used as a mixture with one or more types of another metal oxide colloid or as composite microparticles.

As examples of the other metal oxide, Fe₂O₃, ZrO₂ SnO₂, Ta₂O₅, Nb₂O₅, Y₂O₃, MoO₃, WO₃, PbO, In₂O₃, Bi₂O₃, SrO, etc., can be cited.

As examples of the composite oxide, TiO₂-SnO₂, TiO₂-ZrO₂, TiO₂-ZrO₂-SnO₂, TiO₂-ZrO₂-CeO₂, etc., can be cited.

Among such rutile-based colloids, those having a high transparency, a colloidal particle diameter, as a particle diameter measured by the dynamic light scattering method, of approximately 8 to 60nm, and a refractive index of approximately 1.9 to 2.1 are preferable.

Also, the rutile-based colloid may be used upon being treated by another oxide, a composite oxide, an organosilicon compound, or an organometallic compound.

As a treatment using an oxide or composite oxide, for example, a method where, in a medium of the rutile-based colloid, SiO₂ microparticles are grown by a known method on the colloidal particle surfaces can be cited (see JP Nos. 2000-063119 A and 2007-246351 A).

The added amount of the rutile-based colloid solids with respect to the alkoxysilanes (total amount; the same applies hereinafter) is in a range in which the effects of addition (required characteristics) of the rutile-based microparticles are obtained.

That is, although varying according to the types, etc., of the rutile-based colloid and the alkoxysilanes, a selection is made as appropriate from a range of 15 to 150 parts and preferably 25 to 100 parts of the rutile-based colloid solids with respect to 100 parts of the alkoxysilanes.

When the added amount of the rutile-based colloid solids is low, it is difficult to obtain the addition effects (an increase in refractive index) and the coating film hardness tends to be low, and oppositely when the added amount is high, the tendency for occurrence of an appearance defect due to the coating film whitening phenomenon or due to cracking during thermal polymerization after coating onto an organic lens increases.

### <3> Organic carboxylic acid as a curing catalyst:

There is no restriction in particular to the organic carboxylic acid as long as it is a polyvalent carboxylic acid that provides a curing action. For example, trimellitic acid, trimellitic anhydride, itaconic acid, pyromellitic acid, pyromellitic anhydride, etc., may be used favorably.

The added amount of the organic carboxylic acid is 5 to 40 parts and preferably 10 to 30 parts per 100 parts of the alkoxysilanes. These numerical ranges are not of critical significance. This is because the range is set as suited by a person skilled in the art in accordance with the alkoxysilane composition ((A)/(B)) and the type of organic carboxylic acid.

Here, the organic carboxylic acid may also be used in combination with a small amount of a nitrogen-containing organic compound as an adhesion improving agent.

As the nitrogen-containing organic compound, one type or two or more types may be selected and used from among methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenylimidazole, 2-phenyl-4-methylimidazole, 2-methylimidazole, 2-phenyl-4,5-dihydroxymethylimidazole, 2-phenyl-4-methyl-5-hydroxymethylimidazole, 2,4-diamino-6-[2'-methylimidazolyl-(1')]-ethyl-s-triazine, 2,4-diamino-6-[2'-ethyl-4'-methylimidazolyl-(1')]-ethyl-s-triazine, dicyandiamide, β-aminocrotonic acid ester, and diphenylthiourea.

The added amount of the nitrogen-containing organic compound is 1 to 20 parts and preferably 5 to 10 parts per 100 parts of the alkoxysilanes.

### <Other subsidiary materials>

Minute amounts of an ultraviolet absorber, antioxidant, disperse dye, antistatic agent, surfactant, etc., may be added as necessary to the hard coating composition according to the present invention to improve the coating film performance and appearance performance.
1) As the ultraviolet absorber, a benzotriazole-based or benzophenone-based ultraviolet absorber, etc., may be used, and a hindered-amine-based ultraviolet absorber is preferably used in combination with an antioxidant.
2) As the disperse dye, normally, an aqueous disperse dye is used.
3) As the surfactant, a nonionic type with the hydrophobic group being made of dimethyl silicone oil and the hydrophilic group being made of polyether may be used for the purpose of improving smoothness and antistatic performance.

Although these characteristics can also be obtained by a fluorine-based surfactant, etc., when a fluorine-based surfactant, especially that of a macromolecular type is used in combination with the rutile microparticles that are the (C) component, a characteristic that the rutile microparticles aggregate readily may be exhibited and therefore caution is needed in use.

The usage amount of the surfactant is 0.01 to 0.5 parts and preferably 0.03 to 0.5 parts per 100 parts of the hard coating composition (total amount of the (A) component + the (B) component + the colloidal particles). If the amount is low, it is difficult to provide smoothness and antistatic properties in the coating film, and if the amount is high, clouding occurs during film formation even if a silicone-based surfactant is used.

### <5> High refractive index organic glass lens as the optical substrate:

Commercially available organic glass materials having the following refractive indices may be used for the high refractive index organic glass lens.
(a) Polythiourethane resin: Refractive index 1.61 (ne value)
(b) Urethane acrylic resin: Refractive index 1.61 (ne value)
(c) Polythiourethane resin: Refractive index 1.67 (ne value)
(d) Polythioepoxy resin: Refractive index 1.71 (ne value)
(e) Polythioepoxy resin: Refractive index 1.74 (ne value)

### <6> Method of coating the hard coating composition (coated object):

As methods for coating onto the optical substrate (lens substrate), the normally used methods of brush coating, dip coating, roller coating, spray coating, spin coating, etc., can be cited. The coating amount is set as appropriate so that the cured coating film thickness is in a range of 0.5 to 20µm.

Also, the drying/curing conditions are normally 80 to 150°C × 0.5 to 10h and preferably 100 to 120°C × 1 to 5h.

A pretreatment, such as degreasing using an acid/alkali cleaning solvent, plasma treatment, ultrasonic cleaning, etc., is performed as appropriate on the coated object.

### <7> Arrangement of lens treatment film:

Normally, a primer is preferably formed between the hard coating and the lens substrate for the purpose of improving impact resistance and adhesion.

As a specific primer composition (coating), a primer composition of a thermoplastic polyurethane type (TPU) or thermoplastic ester type (TPEE), etc., that contains the rutile-based colloid may be used favorably.

Further, a normally used antireflection film made only of an inorganic material may be laminated on the upper surface of the hard coating.

The antireflection film may be formed of an inorganic powder of a metal, metal oxide, metal fluoride, etc., by vacuum vapor deposition, sputtering, ion plating, or other dry plating method, etc.

For example, silicon dioxide, titanium (IV) oxide, tantalum (V) oxide, antimony (III) oxide, zirconium oxide, aluminum oxide, etc., can be cited as the metal oxide, and magnesium fluoride, etc., can be cited as the metal fluoride.

As examples of optical film thickness design of antireflection films that are more specific, the following can be cited.
(α) SiO₂/ZrO₂:1/4λ, ZrO₂:1/2λ, SiO₂:1/4λ
(β) SiO₂/TiO₂:1/4λ, TiO₂:1/2λ, SiO₂:1/4λ

### Examples

The present invention shall now be described in further detail based on examples.
(1) As the metal oxide colloids of the respective examples and comparative examples, commercial products of the following specifications were used.
   "Rutile-based colloid I"
   Colloid containing 0.5% diisopropylamine and having colloidal particles (median diameter: 10nm) dispersed in methanol; nonvolatile content: 31%.
   "Rutile-based colloid II"
   Colloid with which the diisopropylamine content in the "rutile-based colloid I" is changed to 2.0%; nonvolatile content: 31%.
   "Rutile-based colloid III"
   Colloid with which the diisopropylamine content in the "rutile-based colloid I" is changed to 3.5%; nonvolatile content: 31%.
   "Titania composite microparticle colloid"
   Colloid having titania composite microparticles (SiO₂/TiO₂ = 0.235, Fe₂O₃/TiO₂ = 0.008) (median diameter: 11 nm) dispersed in methanol: nonvolatile content: 30%.
   "Niobium oxide colloid"
   Colloid having Nb₂O₅ microparticles (median diameter: 5nm) dispersed in ethanol: nonvolatile content: 25%.
   Also, as the lens substrate (plastic lens for spectacles), commercial products made of the following resin materials and having the following refractive indices were used.
   (a) Polythiourethane resin: Refractive index 1.61 (ne value)
   (b) Urethane acrylic resin: Refractive index 1.61 (ne value)
   (c) Polythiourethane resin: Refractive index 1.67 (ne value)
   (d) Polythioepoxy resin: Refractive index 1.71 (ne value)
   (e) Polythioepoxy resin: Refractive index 1.74 (ne value)
(2) The hard coating and primer compositions (coatings) of the respective examples and comparative examples were prepared according to the following formulations.

### <Example 1>

### (i) Hard coating composition

### (1) Preparation of organoalkoxysilane hydrolyzate

While stirring a mixture of 200 parts of γ-glycidoxypropyltrimethoxysilane, 140 parts of tetramethoxysilane, and 200 parts of methyl alcohol, 60 parts of 0.01 N hydrochloric acid were dripped in and stirring was performed for 24 hours to perform hydrolysis and thereby obtain a hydrolyzate.

### (2) Preparation of hard coating composition

Three hundred parts of the rutile-based colloid I, 100 parts of 1-methoxy-2-propanol, 51 parts of trimellitic anhydride, and 15 parts of a nitrogen-containing organic compound were added to the hydrolyzate prepared in (1), stirring was performed for 24 hours, and filtration through a 1 µm filter was performed. The coating film refractive index of this hard coating composition was 1.61.

### (ii) Preparation of primer composition

### (a) Preparation of TPU-based primer composition

While stirring a mixture of 120 parts of a water-based emulsion type TPU (commercial product) with a nonvolatile content of 33%, 500 parts of methyl alcohol, and 150 parts of pure water, 60 parts of the rutile-based colloid I were added, stirring was performed for 2 hours, and filtration through a 1 µm filter was performed to prepare a primer composition. The coating film refractive index of this primer composition was 1.60.

### (b) Preparation of TPEE-based primer composition

While stirring a mixture of 100 parts of a water-based emulsion type with a nonvolatile content of 27%, 400 parts of methyl alcohol, and 150 parts of pure water, 100 parts of the rutile-based colloid II were added, stirring was performed for 2 hours, and filtration through a 1µm filter was performed to prepare a primer composition. The coating film refractive index of this primer composition was 1.66.

### <Example 2>

### (1) Preparation of organoalkoxysilane hydrolyzate

While stirring a mixture of 160 parts of γ-glycidoxypropyltrimethoxysilane, 80 parts of tetramethoxysilane, and 100 parts of methyl alcohol, 60 parts of 0.01N hydrochloric acid were dripped in and thereafter stirring was performed for 24 hours to perform hydrolysis and thereby obtain a hydrolyzate.

### (2) Preparation of hard coating composition

Four hundred sixty parts of the rutile-based colloid II, 100 parts of 1-methoxy-2-propanol, 40 parts of itaconic acid, and 15 parts of a nitrogen-containing organic compound were added to the hydrolyzate prepared in (1), stirring was performed for 24 hours, and filtration through a 1 µm filter was performed. The coating film refractive index of this hard coating composition was 1.67.

### <Example 3>

### (1) Preparation of organoalkoxysilane hydrolyzate

While stirring a mixture of 150 parts of γ-glycidoxypropyltrimethoxysilane, 45 parts of tetramethoxysilane, and 80 parts of methyl alcohol, 50 parts of 0.01 N hydrochloric acid were dripped in and hydrolysis was performed for 24 hours to obtain a hydrolyzate.

### (2) Preparation of hard coating composition

Six hundred twenty parts of the rutile-based colloid III, 100 parts of 1-methoxy-2-propanol, 40 parts of pyromellitic anhydride, and 15 parts of a nitrogen-containing organic compound were added to the hydrolyzate prepared in (1), stirring was performed for 24 hours, and then filtration through a 1µm filter was performed. The coating film refractive index of this composition was 1.71.

### <Comparative Example 1>

One hundred eighty parts of the composite microparticle colloid were added to a mixture of 125 parts of γ-glycidoxypropyltrimethoxysilane, 110 parts of ethyl silicate, 92 parts of methanol, and 200 parts of methyl ethyl ketone, 54 parts of 0.01 N hydrochloric acid were dripped in while stirring, and hydrolysis was performed for 24 hours to obtain a hydrolyzate.

One point five parts of a surfactant, 12 parts of itaconic acid as the low-temperature curing catalyst, and 5 parts of a nitrogen-containing organic compound were added to the above hydrolyzate, stirring was performed for 24 hours, and filtration was performed to obtain a hard coating composition. The coating film refractive index of this hard coating composition was 1.61.

### <Comparative Example 2>

While stirring a mixture of 200 parts of γ-glycidoxypropyltrimethoxysilane, 40 parts of ethyl silicate, and 50 parts of methyl alcohol, 70 parts of 0.01 N hydrochloric acid were dripped in and stirring was performed for 24 hours to perform hydrolysis and thereby obtain a hydrolyzate.

Four hundred eighty parts of the niobium oxide colloid, 100 parts of 2-ethoxyethanol, 48 parts of trimellitic anhydride as the low-temperature curing catalyst, and 15 parts of a nitrogen-containing organic compound were added to the above hydrolyzate, stirring was performed for 24 hours, and then filtration through a 1µm filter was performed. The coating film refractive index of this hard coating composition was 1.61.

### <Comparative Example 3>

Preparation was performed by changing the low-temperature curing catalyst used in Example 1 to 51 parts of trimellitic anhydride and changing the 15 parts of the nitrogen-containing organic compound to 2 parts of aluminum acetylacetonate, stirring was performed for 24 hours, and then filtration through a 1 µm filter was performed to obtain a hard coating composition. The coating film refractive index of this hard coating composition was 1.61.

### (3) Preparation of spectacle lenses for evaluation tests

On each of lens substrates 12 indicated in (a) to (e) above, after pretreatment by immersion washing in a sodium hydroxide aqueous solution, drying, and applying a plasma treatment, a primer 16 and a hard coating 14 using the respective compositions described above and an antireflection film 18 were formed successively under conditions described below to prepare spectacle lenses of the respective test examples (see FIG. 1).

### 1) Formation of primer:

After coating by immersion in each primer composition followed by drawing up at 160mm/min, preliminary drying under conditions of 90°C × 20 minutes was performed.

### 2) Formation of hard coating:

The samples on which the primer was formed were coated by immersion in the respective hard coating compositions followed by drawing up at 130mm/min, preliminarily dried under conditions of 100°C × 20 minutes, and further heat treated under conditions of 120°C × 3h to cure the coating films.

### 3) Formation of antireflection film

Subsequently, the antireflection film of the multilayer film design example (aforementioned α) was formed on the hard coating by the vacuum vapor deposition method.

### (4) Test method

The following evaluation tests regarding the following characteristics were performed on the plastic lenses (test specimens) having the laminated composite films obtained as described above.

### 1) Optical property evaluation

Measurements were made using a reflectance measurement apparatus model USPM-RU-2, made by Olympus Corp., to determine the hard film thickness and the refractive index.

### 2) Appearance

Interference fringes, transparency, coloration, and surface state were examined by naked-eye observation. The judgment criteria are as follows.
(i) Interference fringes A: none at all; B: hardly noticeable; C: slightly noticeable; D: extremely noticeable
(ii) Transparency Good: satisfactorily clear; Fair: transmittance is decreased by 1% within respect to Good; Bad: clear transmittance is decreased by more than 1 % repsect to Good

### 3) Adhesion (initial and after immersion in hot water)

In regard to the initial adhesion, 100 lines of 1mm pitch that reach the substrate were formed in a grid on the coating film surface from above the coating film using a steel knife, a cellophane tape (made by Nichiban Co., Ltd.) was adhered strongly and then peeled rapidly in a 90 degree direction, and evaluation according to the following standards was performed. The judgment criteria are as follows.
A: Peeling does not occur even after no less than 10 times.
AB: Point-like or linear peeling occurs along the pitch lines.
B: Planar peeling (of no more than 20%) occurs along the pitch lines with the peeled area in a single grid cell being no more than 1/2.
C: Planar peeling (of no less than 20%) occurs along the pitch lines with the peeled area in a single grid cell being no more than 1/2.
D: Planar peeling occurs along the pitch lines with the peeled area in a single grid extending across the entire grid cell.

In regard to the adhesion after immersion in hot water, judgment by the same method as the above was performed after immersing for 10 minutes in hot water at 80°C.

### 4) Abrasion resistance

For each test specimen on which a hard coating was formed, judgment was made upon rubbing a sand eraser (JIS #502) at a load of 200g.

The results were judged and evaluated by the naked eye. The judgment criteria are as follows. The judgment result in the case of rubbing in a non-coated state was C.
3A: The flaw area is 0%.
2A: The flaw area exceeds 1% and is less than 2%.
A: The flaw area exceeds 3% and is less than 10%.
AB: The flaw area exceeds 10% and is less than 30%.
B: The flaw area exceeds 30% and is less than 60%.
C: The flaw area is no less than 60%.
D: The flaw area extends across the entire surface.

### 5) Tintability

Two parts of a Seiko-Brown disperse dye and 0.5 parts of Diapon T as a dispersant were dissolved in 1 liter of pure water, and under a condition of a liquid temperature of 92°C, a lens coated with just a hard coating composition was immersed for 5 minutes, and the degree of coloration was measured as transmittance.

### 6) Weatherability test

The test specimen was exposed to 200 hours of an accelerated weatherability test (using the "Sunshine Super Long Life Weather Meter" made by Suga Test Instruments Co., Ltd.) and then the peeling conditions were judged by the same method as the adhesion test of 3) above. At the same time, the transparency, coloration, and surface state after the exposure were examined.

### 7) Light resistance test

Using the Q-Sun/Xe-1 xenon accelerated light resistance tester made by Q-Panel Company Inc., continuous irradiation of 340nm UVA was performed for 40 hours under a temperature of 60°C.

A lens, on which a hard coating composition was coated, then dyeing to 50% coloration (by the same dye used in the tintability test of 5) above) was applied, and thereafter the antireflection film was coated, was used as the test lens, and the transmittances before and after ultraviolet ray irradiation were measured.

### 8) Impact resistance

A 16.2g steel sphere was dropped onto a central portion of a test sample from a height of 1.27m and whether or not the sphere penetrates through was judged. As each test lens, a spherical lens with a central thickness of 2mm and an edge thickness difference of 8mm was used and the test was performed under conditions of a room temperature of 25°C and a relative humidity of 45%.

The judgment criteria are as follows. Good: penetration did not occur; Bad: penetration occurred.

### (5) Test results and discussion

The test results of the respective examples and comparative examples are shown in Tables 1 to 5. The following could be confirmed from these results.
(a) With Examples 1 to 3, it was confirmed that, by the arrangement of the present invention, the characteristics of providing a practical abrasion resistance while suppressing optical interference can be provided, the blackening phenomenon due to ultraviolet rays and the film peeling phenomenon can be suppressed while maintaining the optical characteristics of high refractive index lenses, and discoloration and decoloration in color lenses can be suppressed (see Tables 2 to 4).

That is, in regard to the point that the hard coating composition provides an organic optical lens having a refractive index of 1.60 to 1.74, it was confirmed from Examples 1 to 3 that excellent spectacle performance is obtained with (A)/(B) being in the predetermined range of 10/2 to 10/8 and the total alkoxysilanes/colloidal particles being in the range of 100:25 to 100 and that an effective range of the content of the amine dispersant in the colloid is 0.5 to 5.0%.

It was also confirmed that by using an organic carboxylic acid as the low-temperature curing catalyst at an amount of 10 to 30 parts with respect to 100 parts of the total alkoxysilanes, a hard coating that suppresses blue discoloration due to ultraviolet rays and has a high transparency, weatherability, and light resistance can be obtained when a rutile-based colloid is used.
(b) Comparative Example 1 corresponds to the conventional art using the titania-based composite oxide colloid described in Patent Document 2 and was used to judge the differences in quality in ultrahigh refractive index lenses. With Comparative Example 1, dye decoloration, browning, and film peeling, which were not seen in Examples 1 to 3, were observed.
(c) Comparative Example 2 corresponds to the conventional art using the niobium oxide colloid described in Patent Document 3 and was used to judge the differences in quality in ultrahigh refractive index organic glass lenses. In comparison to Example 3, Comparative Example 2 is not compatible with ultrahigh refractive index organic glass lenses and optical interference was observed.
(d) Comparative Example 3 was used for comparison of cases of using the organic carboxylic acids of the claims as the low-temperature curing catalyst and a case of using another metal chelate catalyst. It was confirmed that unless the rutile-based colloid is combined with an organic carboxylic acid as the low-temperature curing catalyst, blue discoloration occurs due to ultraviolet radiation, thereby lowering the transmittance and degrading the transparency of an organic glass lens.

**[Table 1]**

| | (A) component | (B) component | (A)/(B) | Colloidal particles | (A)+(B) : Colloidal particles | Colloidal particles : Amine | Silane Carboxylic acid |
|---|---|---|---|---|---|---|---|
| Example 1 | 200 parts | 140 parts | 10/7 | 93 parts | 100:27 | 100:0.5 | 100:15 |
| Example 2 | 160 parts | 80 parts | 10/5 | 143 parts | 100:60 | 100:2 | 100:17 |
| Example 3 | 150 parts | 45 parts | 10/3 | 192 parts | 100:98 | 100:3.5 | 100:25 |
| Comparative Example 1 | 125 parts | 110 parts | 10/9 | 54 parts | 100:23 | 100:0 | 100:5 |
| Comparative Example 2 | 200 parts | 40 parts | 10/2 | 120 parts | 100:50 | 100:0 | 100:20 |
| Comparative Example 3 | 200 parts | 140 parts | 10/7 | 93 parts | 100:27 | 100:0.5 | 100:0 |

**[Table 2]**

| | | | Example 1 | | | | |
|---|---|---|---|---|---|---|---|
| Type of spectacle plastic lens | | | (a)1.61 | (b)1.61 | (c)1.67 | (d)1.71 | (e)1.74 |
| | Optical properties | Film thickness (d: µm) | 2.8 | 2.8 | 2.8 | 2.8 | 2.8 |
| | | Coating film refractive index | 1.61 | 1.61 | 1.61 | 1.61 | 1.61 |
| | Appearance | Interference fringes | A | A | B | C | D |
| HD | | transparency | Good | Good | Good | Good | Good |
| | Adhesion | Initial | A/A | A/A | A/A | A/A | A/A |
| | | After immersion in hot water | A/A | A/A | A/A | A/A | A/A |
| | Abrasion resistance | Sand eraser 200g | A | A | A | A | A |
| | Tintability | Transmittance (%) | 86% | 87% | 82% | 91% | 91% |
| | Weatherability | Appearance | Good | Good | Good | Good | Good |
| | | Adhesion | A/A | A/A | A/A | A/A | A/A |
| | Adhesion | Initial | A/A | A/A | A/A | A/A | A/A |
| | | After immersion in hot water | A/A | A/A | A/A | A/A | A/A |
| | Abrasion resistance | SW 600g load | A | A | A | A | A |
| HD+AR | Weatherability | Appearance | Good | Good | Good | Good | Good |
| | | Adhesion | A/A | A/A | A/A | A/A | A/A |
| | Light resistance | Transmittance | 50→ 61% | 50→ 56% | 50→ 59% | 50% coloration not possible | 50% coloration not possible |
| | | Change amount (%) | 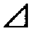 11 | 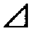 6 | 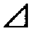 9 | Could not be measured | Could not be measured |
| | Impact resistance | Non PRIMER | Bad | Bad | Bad | Bad | Bad |
| PRIMER +HD+R | Impact resistance | TPE PRIMER | Good | Good | Good | Good | Good |
| | | TPU PRIMER | Good | Good | Good | Good | Good |

**[Table 3]**

| | | | Example 2 | | |
|---|---|---|---|---|---|
| Type of spectacle plastic lens | | | (c)1.67 | (d)1.71 | (e) 1.74 |
| | Optical properties | Film thickness (d: µm) | 2.5 | 2.5 | 2.5 |
| | | Coating film refractive index | 1.67 | 1.67 | 1.67 |
| | Appearance | Interference fringes | A | B | C |
| HD | | Transparency | Good | Good | Good |
| | Adhesion | Initial | A/A | A/A | A/A |
| | | After immersion in hot water | A/A | A/A | A/A |
| | Abrasion resistance | Sand eraser 200g | AB | AB | AB |
| | Tintability | Transmittance (%) | 83% | 91% | 91% |
| | Weatherability | Appearance | Good | Good | Good |
| | | Adhesion | A/A | A/A | A/A |
| | Adhesion | Initial | A/A | A/A | A/A |
| | | After immersion in hot water | A/A | A/A | A/A |
| | Abrasion resistance | SW 600g load | A | A | A |
| HD+AR | Weatherability | Appearance | Good | Good | Good |
| | | Adhesion | A/A | A/A | A/A |
| | Light resistance | Transmittance | 50→60% | 50% coloration not possible | 50% coloration not possible |
| | | Change amount (%) | 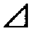 10 | Could not be measured | Could not be measured |
| | Impact resistance | Non PRIMER | Bad | Bad | Bad |
| PRIMER | Impact resistance | TPE PRIMER | Good | Good | Good |
| +HD+R | | TPU PRIMER | Good | Good | Good |

**[Table 4]**

| | | | Example 3 | | |
|---|---|---|---|---|---|
| Type of spectacle plastic lens | | | (c)1.67 | (d)1.71 | (e) 1.74 |
| | Optical properties | Film thickness (d: µm) | 1.9 | 1.9 | 1.9 |
| | | Coating film refractive index | 1.71 | 1.71 | 1.71 |
| | Appearance | Interference fringes | B | A | B |
| HD | | Transparency | Good | Good | Good |
| | Adhesion | Initial | A/A | A/A | A/A |
| | | After immersion in hot water | A/A | A/A | A/A |
| | Abrasion resistance | Sand eraser 200g | AB | AB | AB |
| | Tintability | Transmittance (%) | 84% | 91% | 91% |
| | Weatherability | Appearance | Good | Good | Good |
| | | Adhesion | A/A | A/A | A/A |
| | Adhesion | Initial | A/A | A/A | A/A |
| | | After immersion in hot water | A/A | A/A | A/A |
| | Abrasion resistance | SW 600g load | A | A | A |
| HD+AR | Weatherability | Appearance | Good | Good | Good |
| | | Adhesion | A/A | A/A | A/A |
| | Light resistance | Transmittance | 50→61% | 50% coloration not possible | 50% coloration not possible |
| | | Change amount (%) | 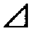 11 | Could not be measured | Could not be measured |
| | Impact resistance | Non PRIMER | Bad | Bad | Bad |
| PRIMER +HD+R | Impact resistance | TPE PRIMER | Good | Good | Good |
| | | TPU PRIMER | Good | Good | Good |

**[Table 5]**

| | | | Comparative Example 1 | | Comparative Example 2 | | Comparative Example 3 |
|---|---|---|---|---|---|---|---|
| Type of spectacle plastic lens | | | (a)1.61 | (b)1.61 | (c) 1.71 | (d)1.74 | (e)1.61 |
| | Optical properties | Film thickness (d: µm) | 2.5 | 2.5 | 2 | 2 | 2.8 |
| | | Coating film refractive index | 1.61 | 1.61 | 1.61 | 1.61 | 1.61 |
| | Appearance | Interference fringes | A | A | D | D | A |
| | | Transparency | Fiar | Fair | Good | Good | Good |
| HD | Adhesion | Initial | A/A | A/A | A/A | A/A | A/A |
| | | After immersion in hot water | A/A | AB/AB | A/A | A/A | A/A |
| | Abrasion resistance | Sand eraser 200g | A | A | A | A | A |
| | Tintability | Transmittance (%) | 86% | 87% | 82% | 91% | 86% |
| | Weatherability | Appearance | Cracking across entire surface | Cracking across entire surface | Good | Good | Blue discoloration |
| | | Adhesion | D/C | D/D | A/A | A/A | A/A |
| | Adhesion | Initial | A/A | A/A | A/A | A/A | A/A |
| | | After immersion in hot water | A/A | AB/AB | A/A | A/A | A/A |
| | Abrasion resistance | SW 600g load | A | A | A | A | A |
| HD+AR | Weatherability | Appearance | Black discoloration | Black discoloration | Good | Good | Good |
| | | Adhesion | A/A | A/A | A/A | A/A | A/A |
| | Light resistance | Transmittance | 50→75% | 50→76% | 50→61% | 50→61% | 50→61% |
| | | Change amount (%) | 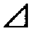 25 | 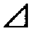 26 | 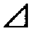 11 | 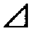 11 | 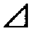 11 |
| | Impact resistance | Non PRIMER | Bad | Bad | Bad | Bad | Bad |
| PRIMER +HD+R | Impact resistance | TPE PRIMER | Good | Good | Good | Good | Good |
| | | TPU PRIMER | Good | Good | Good | Good | Good |

## Claims

1. A hard coating composition applied to an optical component body formed of an organic glass,
comprising, as coating film forming components, an alkoxysilane hydrolyzate and a low-temperature curing catalyst of the hydrolyzate, and
wherein the alkoxysilane hydrolyzate is a hydrolyzate of a mixture of a predetermined ratio of
an (A) component that is a trialkoxysilane represented by the rational formula 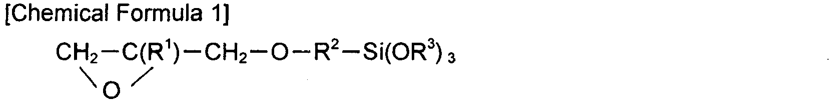 (where R¹ represents H or CH₃, R² represents an alkylene group with 1 to 4 carbon atoms, and R³ represents an alkyl group with 1 to 4 carbon atoms) and
a (B) component that is a tetraalkoxysilane represented by the rational formula Si(OR⁴)₄ (where R⁴ represents an alkyl group with 1 to 4 carbon atoms),
a metal oxide colloid is blended to enable a coating film refractive index of a hard coating to be made approximate to the refractive index of the organic glass,
the metal oxide colloid is a rutile-based colloid containing an amine dispersant, the low-temperature curing catalyst is an organic carboxylic acid, and a ratio of the (B) component with respect to the (A) component is increased to make the hard coating have a practical abrasion resistance.

2. The hard coating composition according to claim 1, wherein the dispersant is one type or two or more types of substance selected from among ammonia and aliphatic amines, aliphatic diamines, cyclic amines, and derivatives thereof with which one, two, or three of the hydrogen atoms of ammonia NH₃ is or are substituted by a hydrocarbon group R⁵ (with 1 to 5 carbon atoms).

3. The hard coating composition according to claim 2, wherein the mixing mass ratio of the (B) component with respect to the (A) component is set as (A)/(B) = 10/2 to 10/8.

4. The hard coating composition according to claim 1, 2, or 3, wherein the colloidal particle diameter of the rutile-based colloid is in a range of 5 to 60nm, a blend ratio of the amine dispersant with respect to 100 parts by mass of the colloidal particles is 0.3 to 5.0 parts by mass, and the respective blend ratios of the colloidal particles (solids) and the organic carboxylic acid with respect to 100 parts by mass of the total alkoxysilanes, which is the total amount of the (A) component and the (B) component, are 25 to 100 parts by mass for the former and 10 to 30 parts by mass for the latter.

5. An optical component comprising a hard coating formed by the hard coating composition according to claim 4 on one surface or both surfaces of an optical substrate formed of an organic glass with a refractive index of 1.60 to 1.74.

6. The optical component according to claim 5, wherein the organic glass is any of an acrylic resin, a polythiourethane resin, and a polythioepoxy resin with a refractive index of 1.60 to 1.74.

7. The optical component according to claim 5, further comprising a primer film disposed between the optical substrate and the hard coating.

8. The optical component according to claim 6, further comprising a primer film disposed between the optical substrate and the hard coating.

9. The optical component according to claim 7, further comprising an optical inorganic thin film (including an antireflection film, a high reflectance film, or an interference filter) disposed on a top surface side of the hard coating.

10. The optical component according to claim 8, further comprising an optical inorganic thin film (including an antireflection film, a high reflectance film, or an interference filter) disposed on a top surface side of the hard coating.

## Patentansprüche

1. Eine Hartbeschichtungszusammensetzung, aufgetragen auf einen optischen Komponentenkörper, gebildet aus einem organischen Glas,
umfassend, als beschichtungsfilmbildende Komponenten, ein Alkoxysilanhydrolysat und einen niedertemperaturhärtenden Katalysator des Hydrolysats und
wobei das Alkoxysilanhydrolysat ein Hydrolysat ist von einer Mischung eines vorbestimmten Verhältnisses von
einer (A) Komponente, die ein Trialkoxysilan ist, dargestellt durch die rationale Formel 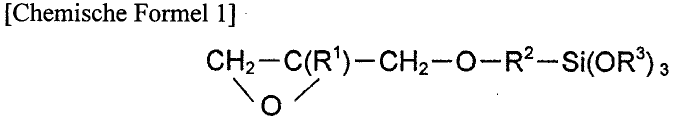 (wobei R¹ H oder CH₃ darstellt, R² eine Alkylengruppe mit 1 bis 4 Kohlenstoffatomen darstellt und R³ eine Alkylgruppe mit 1 bis 4 Kohlenstoffatomen darstellt) und
einer (B) Komponente, die ein Tetraalkoxysilan ist, dargestellt durch die rationale Formel Si(OR⁴)₄ (wobei R⁴ eine Alkylgruppe mit 1 bis 4 Kohlenstoffatomen darstellt), ein Metalloxidkolloid beigemischt ist, um einen Brechungsindex des Beschichtungsfilms der Hartbeschichtung zu ermöglichen, der annähernd dem Brechungsindex des organischen Glases entspricht,
das Metalloxidkolloid ein Kolloid auf der Basis von Rutil ist, das ein Amindispergiermittel enthält, der niedertemperaturhärtende Katalysator eine organische Carbonsäure ist und ein Verhältnis der (B) Komponente in Bezug auf die (A) Komponente erhöht ist, damit die Hartbeschichtung eine geeignete Abriebfestigkeit aufweist.

2. Die Hartbeschichtungszusammensetzung gemäß Anspruch 1, wobei das Dispergiermittel eine Art oder zwei oder mehr Arten von Substanzen ist, ausgewählt aus Ammoniak und aliphatischen Aminen, aliphatischen Diaminen, cyclischen Aminen, und Derivaten davon bei denen ein, zwei oder drei der Wasserstoffatome des Ammoniaks NH₃ durch eine Kohlenwasserstoffgruppe R⁵ (mit 1 bis 5 Kohlenstoffatomen) substituiert ist oder sind.

3. Die Hartbeschichtungszusammensetzung gemäß Anspruch 2, wobei das Mischungsmassenverhältnis der (B) Komponente in Bezug auf die (A) Komponente auf (A)/(B) = 10/2 bis 10/8 festgelegt ist.

4. Die Hartbeschichtungszusammensetzung gemäß Anspruch 1, 2 oder 3, wobei der kolloidale Partikeldurchmesser des Kolloids auf der Basis von Rutil in einem Bereich von 5 bis 60 nm ist, ein Mischungsverhältnis des Amindispergiermittels in Bezug auf 100 Massenteile der kolloidalen Partikel 0,3 bis 5,0 Massenteile ist, und die jeweiligen Mischungsverhältnisse der kolloidalen Partikel (Feststoffe) und der organischen Carbonsäure in Bezug auf 100 Massenteile der gesamten Alkoxysilane, die die Gesamtmenge der (A) Komponente und der (B) Komponente ist, 25 bis 100 Masseteile für die Erstgenannte und 10 bis 30 Masseteile für die Letztere sind.

5. Eine optische Komponente, umfassend eine Hartbeschichtung, gebildet durch die Hartbeschichtungszusammensetzung gemäß Anspruch 4, auf einer Oberfläche oder beiden Oberflächen eines optischen Substrats, gebildet aus einem organischen Glas mit einem Brechungsindex von 1,60 bis 1,74.

6. Die optische Komponente gemäß Anspruch 5, wobei das organische Glas eines aus einem Acrylharz, einem Polythiourethanharz und einem Polythioepoxyharz mit einem Brechungsindex von 1,60 bis 1,74 ist.

7. Die optische Komponente gemäß Anspruch 5, ferner umfassend einen Primerfilm, angeordnet zwischen dem optischen Substrat und der Hartbeschichtung.

8. Die optische Komponente gemäß Anspruch 6, ferner umfassend einen Primerfilm, angeordnet zwischen dem optischen Substrat und der Hartbeschichtung.

9. Die optische Komponente gemäß Anspruch 7, ferner umfassend einen optischen anorganischen Dünnfilm (der einen Antireflexionsfilm, einen Hochreflexionsfilm oder einen Interferenzfilter einschließt), angeordnet auf einer oberen Oberflächenseite der Hartbeschichtung.

10. Die optische Komponente gemäß Anspruch 8, ferner umfassend einen optischen anorganischen Dünnfilm (der einen Antireflexionsfilm, einen Hochreflexionsfilm oder einen Interferenzfilter einschließt), angeordnet auf einer oberen Oberflächenseite der Hartbeschichtung.

## Revendications

1. Composition de revêtement dur appliquée sur un corps de composant optique constitué d'un verre organique,
comprenant, en tant que composants de formation de film de revêtement, un hydrolysat d'alcoxysilane et un catalyseur de durcissement à basse température de l'hydrolysat, et
dans laquelle l'hydrolysat d'alcoxysilane est un hydrolysat d'un mélange d'un rapport prédéterminé de
un composant (A) qui est un trialcoxysilane représenté par la formule rationnelle 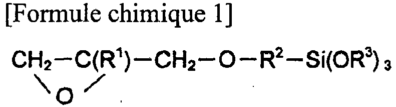 (où R¹ représente H ou CH₃, R² représente un groupe alkylène avec 1 à 4 atomes de carbone et R³ représente un groupe alkyle avec 1 à 4 atomes de carbone) et
un composant (B) qui est un tétraalcoxysilane représenté par la formule rationnelle Si(OR⁴)₄ (où R⁴ représente un groupe alkyle avec 1 à 4 atomes de carbone),
un colloïde d'oxyde métallique est mélangé pour obtenir un indice de réfraction du film de revêtement d'un revêtement dur d'être environ identique à l'indice de réfraction du verre organique,
le colloïde d'oxyde métallique est un colloïde à base de rutile contenant un dispersant aminé, le catalyseur de durcissement à basse température est un acide carboxylique organique, et un rapport du composant (B) par rapport au composant (A) est augmenté pour que le revêtement dur ait une résistance à l'abrasion pratique.

2. Composition de revêtement dur selon la revendication 1, dans laquelle le dispersant est un type ou deux types ou plus de substances choisies parmi l'ammoniac et les amines aliphatiques, les diamines aliphatiques, les amines cycliques et leurs dérivés, où un, deux ou trois des atomes d'hydrogène de l'ammoniac NH₃ sont substitués par un groupe hydrocarboné R⁵ (avec 1 à 5 atomes de carbone).

3. Composition de revêtement dur selon la revendication 2, dans laquelle le rapport massique de mélange du composant (B) par rapport au composant (A) est tel que (A)/(B) = 10/2 à 10/8.

4. Composition de revêtement dur selon la revendication 1, 2 ou 3, dans laquelle le diamètre de particule colloïdale du colloïde à base de rutile est compris dans la plage allant de 5 à 60 nm, un rapport de mélange du dispersant aminé par rapport à 100 parties en masse des particules colloïdales est de 0,3 à 5,0 parties en masse, et les rapports de mélange respectifs des particules colloïdales (solides) et de l'acide carboxylique organique par rapport à 100 parties en masse des alcoxysilanes totaux, qui est la quantité totale du composant (A) et du composant (B), sont de 25 à 100 parties en masse pour le premier et de 10 à 30 parties en masse pour le second.

5. Composant optique comprenant un revêtement dur formé par la composition de revêtement dur selon la revendication 4 sur une surface ou les deux surfaces d'un substrat optique constitué d'un verre organique avec un indice de réfraction de 1,60 à 1,74.

6. Composant optique selon la revendication 5, dans lequel le verre organique est n'importe lequel d'une résine acrylique, d'une résine de polythiouréthane et d'une résine de polythioépoxy avec un indice de réfraction de 1,60 à 1,74.

7. Composant optique selon la revendication 5, comprenant en outre un film primaire disposé entre le substrat optique et le revêtement dur.

8. Composant optique selon la revendication 6, comprenant en outre un film primaire disposé entre le substrat optique et le revêtement dur.

9. Composant optique selon la revendication 7, comprenant en outre un film mince inorganique optique (incluant un film antireflet, un film de réflectance élevée ou un filtre d'interférence) disposé sur un côté de la surface supérieure du revêtement dur.

10. Composant optique selon la revendication 8, comprenant en outre un film mince inorganique optique (incluant un film antireflet, un film de réflectance élevée ou un filtre d'interférence) disposé sur un côté de la surface supérieure du revêtement dur.
